# EUROPÄISCHE PATENTSCHRIFT

(11) **EP 2 232 661 B1**
(45) Veröffentlichungstag und Bekanntmachung des Hinweises auf die Patenterteilung: **27.09.2017**
(21) Anmeldenummer: 08870573.6
(22) Anmeldetag: 29.12.2008
(51) Int. Cl.: H02H 3/33, H01H 1/00

(54) **MIT EINEM SCHUTZSCHALTER MECHANISCH KOPPPELBARES MODUL**
MODULE MECHANICALLY LINKABLE TO A CIRCUIT BREAKER
MODULE POUVANT ÊTRE COUPLE MÉCANIQUEMENT À UN DISJONCTEUR

(30) Priorität: 17.01.2008 DE 102008004870
(43) Veröffentlichungstag der Anmeldung: 29.09.2010
(73) Patentinhaber: Siemens Aktiengesellschaft, 80333 München (DE)
(72) Erfinder: HERRMANN, Johann, 84066 Mallersdorf-Pfaffenberg (DE); HUBER, Hans-Jürgen, 93047 Regensburg (DE); MARTEL, Jean-Mary, 93105 Tegernheim (DE); KLEEMEIER, Manfred, 93073 Neutraubling (DE)
(86) Internationale Anmeldenummer: PCT/EP2008/068314
(87) Internationale Veröffentlichungsnummer: WO 2009/089993

(56) Entgegenhaltungen:
- EP-A- 0 649 158
- AT-B- 406 208
- US-A- 6 031 699
- US-B1- 6 414 829

## Beschreibung

Die Erfindung befasst sich mit dem Schutz vor in einem Stromkreis auftretenden Lichtbögen.

Ein Lichtbogen kann in einem Stromkreis z. B. auftreten, wenn ein Lichtschalter defekt ist und der Abstand zwischen zwei Kontakten des Lichtschalters zu klein ist, als dass der Stromfluss unterbrochen werden könnte. Dann bildet sich eben zwischen den zwei Kontakten ein Lichtbogen aus. Neben einem im Stromkreis in Serie sich ausbildenden Lichtbogen kann der Lichtbogen auch zwischen Phase und Neutralleiter des Stromkreises entstehen. Treten Lichtbögen auf, so erhöht sich die Temperatur der umliegenden Bauteile, und es kann ein Brand entstehen.

Es ist daher sinnvoll, eine Einrichtung bereitzustellen, mit der ein Schutz vor Lichtbögen gewährleistet ist. In den USA, in denen die so genannte UL-Technik (Underwriters laboratories, Norm mit 110 V Netzspannung) verwendet wird, sind derartige Einrichtung sogar vorgeschrieben. Dort werden Lichtbogenschutzschalter eingesetzt, und zwar erfassen diese anhand vorbestimmter Kriterien, ob ein Lichtbogen in dem Stromkreis vorliegt und weisen selbst einen Trennkontakt auf, der im Falle des Vorliegens eines Lichtbogens geöffnet wird. Die in Lichtbogenschutzschaltern verwendeten Prinzipien sind in US-Patent 5,729,145 und US-Patent 6,031,699 beschrieben. In den europäischen Ländern, in denen die IEC-Technik (International Electrotechnical Commission, Norm mit einer Spannung von 230 V) eingesetzt wird, sind Lichtbogenschutzschalter nicht zwingend vorgeschrieben. Stromkreise in IEC-Technik sind mit Leitungsschutzschalter und Fehlerschutzstromschalter geschützt. Bekanntlich arbeiten Fehlerstromschutzschalter und Leitungsschutzschalter für die IEC-Technik aufgrund der Vorschriften unabhängig von der Netzspannung. Manchmal wird ein Leitungsschutzschalter mit einem Fehlerstromschutzmodul verbunden, das keine eigenen Trennkontakte aufweist. Sollte zu diesen Einheiten noch ein eigener Lichtbogenschutzschalter hinzutreten, wäre dies mit einem hohen Aufwand verbunden.

In der US 5, 729, 145 A ist ein Schutzschalter beschrieben, der ausschließlich zum Schutz vor Lichtbögen ausgebildet ist. Bei diesem Schutzschalter werden mit einem Logikmodul Signale einer Schaltung zum Erkennen eines Lichtbogens ausgewertet, wobei die Schaltung zum Erkennen eines Lichtbogens ein Eingangssignal von einem Summenstromwandler entgegennimmt. Im Falle eines Auftretens eines Lichtbogens gibt das Logikmodul ein elektrisches Signal an eine Zylinderspule ab, die dann einen mechanischen Auslösemechanismus anstößt.

Aus dem Stand der Technik sind Kombinationen aus einem Fehlerstromschutzschalter und einer Einheit zum Erkennen, ob ein Lichtbogen auftritt, bekannt.

In der US 6, 433, 977 B1 ist ein Schutzschalter beschrieben, der eine Einheit zum Auslösen des Schutzschalters bei Auftreten eines Fehlerstroms und eine Einheit zum Auslösen bei Auftreten eines Lichtbogens aufweist. In einer Ausführungsform ist es in einem Testbetrieb möglich, durch Schalten eines Thyristors einen Fehlerstrom zu simulieren, wobei der Thyristor von der Einheit zum Auslösen bei Auftreten eines Lichtbogens ansteuerbar ist. Die Einheit zum Auslösen bei Auftreten eines Fehlerstroms wertet ein Signal eines Summenstromwandlers elektronisch aus und löst gegebenenfalls eine mechanische Auslöseeinheit mittels eines elektrischen Signals an einen Thyristor aus, durch den ein Strom zum Betreiben einer Spule gesteuert wird.

Ein in der US 6,031,699 A beschriebener Schutzschalter weist eine Einheit zum Detektieren von Lichtbögen und eine Einheit zum Erkennen von Fehlerströmen auf. Beide Einheiten können unabhängig voneinander ein elektrisches Signal erzeugen. Durch ein solches Signal wird jeweils ein Thyristor geschaltet, wodurch ein Auslösemechanismus des Schutzschalters ausgelöst wird.

Schutzschalter dieser Art sind in der UL-Technik ausgeführt und benötigen zum Erzeugen des elektrischen Signals eine schalterinterne Spannungsversorgung. Damit sind sie nicht konform zur IEC-Technik. Insbesondere weisen sie keine Fehlerstromschutzfunktion und Leitungsschutzfunktion auf, die netzspannungsunabhängig bereitgestellt ist.

In der Druckschrift AT 406 208 B ist ein zur IEC-Technik konformer Fehlerstromschutzschalter beschrieben, bei dem ein Fehlerstromsignal eines Summenstromwandlers von einer Schaltungsanordnung erfasst wird und gegebenenfalls ein Signal zum Auslösen eines Fehlerstromauslösers von der Schaltungsanordnung erzeugt wird. Der Fehlerstromschutzschalter weist des Weiteren eine Schaltungsanordnung auf, die in der Lage ist, im Falle einer Überspannung einen Fehlerstrom zu simulieren und dadurch den Fehlerstromschutzschalter auszulösen.

Es ist Aufgabe der Erfindung, einen Schutz von Stromkreisen in IEC-Technik vor Lichtbögen zu ermöglichen, ohne dass ein übermäßiger Aufwand getrieben wird.

Die Aufgabe wird durch ein mit einem Schutzschalter mechanisch koppelbares Modul mit den Merkmalen gemäß Patentanspruch 1 und eine Anordnung mit den Merkmalen gemäß Patentanspruch 10 gelöst.

Die Erfindung besteht in der Erweiterung eines so genannten Fehlerstromschutzschaltermoduls. Während ein Schutzschalter in den zu schützenden Stromkreis geschaltet wird und Trennkontakte aufweist, die dazu dienen, besagten Stromkreis zu unterbrechen, nutzt ein mit einem solchen Schutzschalter mechanisch koppelbares Modul zum Unterbrechen des Stromkreise eben die Trennkontakte des Schutzschalters. Ein solches Modul muss zunächst einmal im Falle eines Fehlerstroms auf diese Trennkontakte einwirken, und hierzu muss durch das Modul ein solcher Fehlerstrom überhaupt erfassbar sein. Dies ist nur möglich, wenn auch das Modul, so wie eben der Schutzschalter, in den Stromkreis geschaltet wird. Hierzu weist es für jeden Leiter des Stromkreises (Phase oder Nullleiter bzw. drei Phasen und Nullleiter) einen Eingangsanschluss und einen Ausgangsanschluss auf, wobei diese paarweise über eine Verbindungsleitung miteinander verbunden sind.

Ein Fehlerstrom ist dadurch erkennbar, dass in einer Hinrichtung ein Strom fließt, dieser aber nicht mehr über die Rückrichtung in dem Stromkreis zurückfließt, sondern anderweitig abfließt. Der Fehlerschutzstromschalter umfasst nun geeignete Mittel, nämlich solche die genau für eine Fehlerstromschutzfunktion bereitgestellt sind, die bei einer einen Grenzwert überschreitenden Differenz zwischen der Stromstärke eines durch zumindest eine erste der Verbindungsleitungen in eine Hinrichtung fließenden Stroms einerseits und der Stromstärke eines durch zumindest eine zweite der Verbindungsleitungen in einer Rückrichtung fließenden Stroms andererseits zumindest mittelbar (üblicherweise über ein von den Mitteln bewegtes Element, z.B. einen Haltemagneten) auf eine mechanische Auslöseeinrichtung einwirken.

In dem Fehlerstromschutzmodul wird bevorzugt als für eine Fehlerstromschutzfunktion bereitgestellte Mittel ein Summenstromwandler verwendet, und die mechanische Auslöseeinrichtung wird eben durch einen im Bereich einer Sekundärwicklung des Summenstromwandlers bereitgestellten Magneten betätigt. "Im Bereich einer Sekundärwicklung bereitgestellt" bedeutet hierbei, dass bei den erwartbaren Amplituden eines Fehlerstroms in der Sekundärwicklung ein bestimmtes Magnetfeld erzeugt wird, und dass der Magnet eben durch ein Magnetfeld einer solchen Höhe bewegbar ist.

Die mechanische Auslöseeinrichtung ist derart gebaut und an dem Modul angeordnet, dass sie bei Kopplung des Moduls mit einem Schutzschalter, der passend hierzu ebenfalls ausgelegt ist, auf diesen einwirkt (und insbesondere dessen Trennkontakte über eine mechanische Auslöseeinrichtung des Schutzschalters öffnet).

Geeignete Mittel zum Erfassen stellen fest, ob ein Lichtbogen in dem Stromkreis, in den das Modul geschaltet ist, auftritt. Eine entsprechende Information oder entsprechende Signale werden an eine Steuereinrichtung weitergegeben, die mit den Mitteln zum Erfassen gekoppelt ist. Eine Steuereinrichtung kann auch Teil der Mittel zum Erfassen sein und verfügt dann automatisch über besagte Informationen.

Des Weiteren ist das erfindungsgemäße Modul derart ausgelegt, dass die Steuereinrichtung die mechanische Auslöseeinrichtung zumindest mittelbar betätigt. Die Erfindung nimmt in Kauf, dass in einem Fehlerstromschutzschalter, der bei der IEC-Technik bei einem Fehlerstrom seine Trennkontakte netzspannungsunabhängig öffnen soll, unter Umständen für eine zweite Funktionalität, nämlich für die Erkennung des Auftretens eines Lichtbogens und ein Auslösen hierbei, netzspannungsabhängig gearbeitet wird. Die bisher bekannten Mittel zum Erfassen, ob in einem Stromkreis ein Lichtbogen auftritt, umfassen nämlich Mikrocontroller und sind daher von einer Versorgungsspannung abhängig. Das erfindungsgemäße Modul ist mit andern Worten in der Lage, eine Fehlerstromschutzfunktion bereitzustellen, die konform zur IEC-Technik ist. Dennoch gelingt es, zusätzlich einen Schutz von Stromkreisen vor Lichtbögen zu ermöglichen.

In einer vorteilhaften Ausgestaltung des erfindungsgemäßen Moduls werden zum mittelbaren Betätigen der mechanischen Auslöseeinrichtung Mittel zum Bewegen des Magneten (im Bereich der Sekundärwicklung) bereitgestellt, wobei die Steuereinrichtung die Mittel zum Bewegen elektrisch ansteuert, wenn die Mittel zum Erfassen das Vorliegen eines Lichtbogens erkennen.

Die Mittel zum Bewegen des Magneten erlauben es, ein Modul mit einer Fehlerstromschutzfunktion durch Hinzufügen einer elektronischen Schaltung auf einfache Weise um eine Schutzfunktion gegen Lichtbögen zu erweitern. In dem Modul müssen für die Mittel zum Erfassen keine zusätzlichen mechanischen Vorrichtungen zum direkten Betätigen der mechanischen Auslöseeinrichtung selbst vorgesehen werden.

In einer alternativen Ausführungsform des erfindungsgemäßen Moduls sind allerdings zusätzliche Mittel zum Betätigen der Auslöseeinrichtung bereitgestellt. Diese Mittel werden von der Steuereinrichtung angesteuert, wenn die Mittel zum Erfassen das Vorliegen eines Lichtbogens erkennen. Bei dieser Ausführungsform ergibt sich der Vorteil, dass die Mittel zum Betätigen der Auslöseeinrichtung an die Steuereinrichtung für die Funktion des Schutzes vor einem Lichtbogen optimiert gestaltet sein können. Bei den Mitteln zum Betätigen kann es sich um einen weiteren Haltemagneten handeln, bei dem eine Spule zum Bewegen des Haltemagneten in der Weise ausgelegt ist, dass mit einem von der Steuereinrichtung erzeugbaren elektrischen Signal eine besonders hohe Kraft auf den Haltemagneten ausübbar ist. Mittels des Haltemagneten kann die Auslöseeinrichtung durch ein elektrisches Signal dann besonders zuverlässig betätigt werden. Anstelle eines Haltemagneten kann es sich bei den Mitteln zum Betätigen auch um einen elektrisch betriebenen Aktor handeln.

Fehlerstromschutzmodule umfassen üblicherweise auch Mittel zum wahlweisen Erzeugen eines nur über die zumindest erste oder nur über die zumindest zweite der Verbindungsleitungen fließenden Stroms, wobei vorliegend lediglich derjenige Teilabschnitt der Verbindungsleitungen von Interesse ist, der die für eine Fehlerschutzstromfunktion bereitgestellten Mittel durchläuft, also in einem Erfassungsbereich der für die Fehlerstromfunktion bereitgestellten Mittel bereitgestellt ist. Die Mittel zum wahlweisen Erzeugen eines solchen Strom simulieren nämlich einen Fehlerstrom aus Sicht der für eine Fehlerstromschutzfunktion bereitgestellten Mittel, so dass der Mechanismus des Auslösens auch wahlweise zu Überprüfungszwecken einsetzbar ist.

Bei einer weiteren alternativen Weiterbildung des erfindungsgemäßen Moduls wird den Mitteln zum wahlweisen Erzeugen eine andere Funktion oder zumindest eine Zusatzfunktion gegeben, und zwar wird besagter Strom außer zum Prüfen insbesondere auch im Fall des Auftretens eines Lichtbogens von den Mitteln zum wahlweisen Erzeugen hervorgerufen.

Die Steuermittel zum wahlweisen Erzeugen sind nun elektrisch ansteuerbar gestaltet, z. B. über ein einfaches Relais. Die Steuereinrichtung ist mit diesen Mitteln zum wahlweisen Erzeugen gekoppelt, z. B. mit besagtem Relais, das zu den Mitteln zum wahlweisen Erzeugen dazugehört. Im Falle des Erkennens des Auftretens eines Lichtbogens in dem zu schützenden Stromkreis werden die Mittel zum wahlweisen Erzeugen aktiviert, es fließt ein Strom, der in den für eine Fehlerstromschutzfunktion bereitgestellten Mitteln dieselbe Wirkung hervorruft wie ein Fehlerstrom, so dass es zum mechanischen Auslösen der Auslöseeinrichtung kommt und ein mit dem Modul gekoppelter Schutzschalter veranlasst wird, seine Trennkontakte zu öffnen.

Die Mittel zum Erfassen, ob ein Lichtbogen auftritt, können relativ unaufwändig in einem Fehlerstromschutzmodul bekannter Art vorgesehen werden, wobei weiterhin eine kompakte Bauweise des Moduls gewährleistet ist. Es steht durch eine erfindungsgemäße Erweiterung eines Fehlerstromschutzmoduls um eine Lichtbogenschutzfunktion die Möglichkeit eines Lichtbogenschutzes in einfacher Weise zur Verfügung, und es muss für den Lichtbogenschutz insbesondere kein geeigneter Schutzschalter oder ein geeignetes Modul bereitgestellt werden. Die Lichtbogenschutzfunktion nutzt hierbei ohnehin vorhandene Funktionalitäten des Fehlerstromschutzmoduls.

Die Erfindung spiegelt sich auch in einer Anordnung gemäß Patentanspruch 10 wider. Es handelt sich hierbei um eine Reihenschaltung aus einem Leitungsschutzschalter und einem erfindungsgemäßen Modul. Selbstverständlich muss nicht nur das Modul mechanisch an einen Schutzschalter koppelbar sein, sondern umgekehrt muss auch der Leitungsschutzschalter mit dem Modul mechanisch koppelbar gestaltet sein und auch tatsächlich gekoppelt sein. Die Kopplung erfolgt insbesondere über die mechanischen Auslöseeinrichtungen, und zwar sollte bei Kopplung von Modul und Leitungsschutzschalter die Auslöseeinrichtung des Moduls eben auf eine Auslöseeinrichtung des Leitungsschutzschalters einzuwirken ausgelegt sein und im Betrieb, eben bei einem Fehlerstrom oder beim Auftreten eines Lichtbogens, tatsächlich einwirken. Die mechanische Auslöseeinrichtung des Leitungsschutzschalters wiederum sollte zumindest einen Trennkontakt öffnen können, wodurch dann eben der Stromkreis unterbrochen wird, in dem die Reihenschaltung schaltbar bzw. tatsächlich geschaltet ist.

Die Mittel zum Erfassen erkennen üblicherweise einen Lichtbogen aufgrund bestimmter Merkmale des Stroms in dem Stromkreis. Strom fließt in dem Stromkreis nun über die Verbindungsleitungen zwischen den Eingangs- und Ausgangsanschlüssen des erfindungsgemäßen Moduls, und die Mittel zum Erfassen können an zumindest einer dieser Verbindungsleitungen eben eine Information über den in dem Stromkreis fließenden Strom im Betrieb gewinnen.

Eine zum Erfassen, ob ein Lichtbogen in dem Stromkreis auftritt, wichtige Information ist die Amplitude des Stroms. Geeignete Mittel zum Messen dieser Amplitude sollten daher bereitgestellt sein, und diese können einen Stromwandler und einen nachgeschalteten Verstärker umfassen. Der Stromwandler muss lediglich an einer einzigen der Verbindungsleitungen angeordnet sein.

Es kann auch anhand des Hochfrequenzrauschens des Stroms erfasst werden, ob ein Lichtbogen im Stromkreis auftritt. Somit umfassen die Mittel zum Erfassen in einer bevorzugten Ausführungsform einen Hochfrequenzempfänger.

Zu den Mitteln zum Erfassen gehört bevorzugt auch eine Auswerteeinheit, die bevorzugt eine elektronische Auswerteeinheit ist, und diese empfängt von den Mitteln zum Messen der Amplitude die Messsignale und die Ausgangssignale des HF-Empfängers. Bei Erfüllung bestimmter Kriterien steuert die Auswerteeinheit einen Schalter an. Dieser Schalter kann bei einer Ausführungsform Teil der Mittel zum wahlweisen Erzeugen sein, wobei sich das "wahlweise" dann auf ein Schließen des Schalters bezieht. Die Auswerteeinheit, die als Mikrocontroller ausgebildet sein kann, auf dem ein Algorithmus abläuft, kann nach sehr komplexen Kriterien und Kriterienkombinationen vorgehen. Die beiden Hauptkriterien, anhand derer erfasst werden kann, ob ein Lichtbogen auftritt, bestehen in dem Überschreiten einer bestimmten Amplitude durch den Strom, z. B. wenn die Stromstärke 5 A überschreitet, und in einer periodischen Variation des hochfrequenten Rauschens mit dem Strom.

Die Mittel zum wahlweisen Erzeugen können bei Verwendung eines Summenstromwandlers ganz einfach eine über einen Schalter trennbare Verbindung umfassen, und zwar werden ein Anschluss an einer Verbindungsleitung auf einer Eingangsseite des Summenstromwandlers und ein Anschluss an einer anderen Verbindungsleitung auf einer Ausgangsseite des Summenstromwandlers miteinander verbunden. Der Abschnitt der Verbindungsleitungen vom Eingangsanschluss zum Ausgangsanschluss des Moduls, der von der Eingangsseite zur Ausgangsseite verläuft, ist eben genau der oben genannte Erfassungsbereich des Summenstromwandlers. Der Schalter in der Verbindung zwischen den beiden Anschlüssen ist genau der Schalter, der in einer bevorzugten Ausführungsform durch die oben genannte Auswerteeinheit betätigt wird.

Nachfolgend werden bevorzugte Ausführungsformen der Erfindung unter Bezug auf die Zeichnungen beschrieben. Dabei zeigen:
- FIG 1: eine Ausführungsform einer erfindungsgemäßen Anordnung, nämlich eine Reihenschaltung, bei der eine Ausführungsform eines erfindungsgemäßen Moduls mit einem Leitungsschutzschalter gekoppelt ist.
- FIG 2: eine mechanisch mit einem Schutzschalter gekoppelte, weitere Ausführungsform eines erfindungsgemäßen Moduls und
- FIG 3: eine mechanisch mit einem Schutzschalter gekoppelte dritte Ausführungsform eines erfindungsgemäßen Moduls.

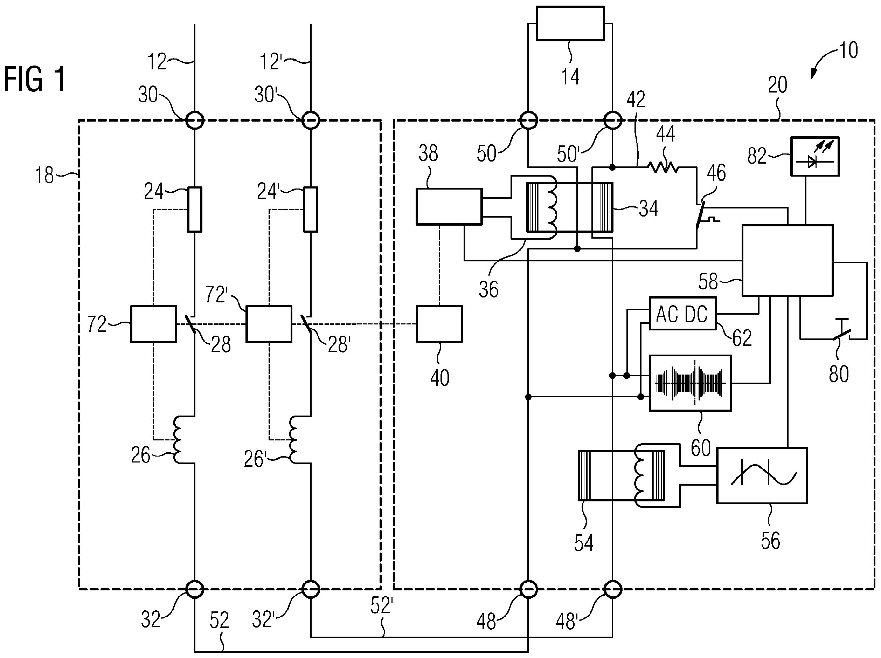

Die in der FIG 1 gezeigte Anordnung 10 ist eine Reihenschaltung aus einem Leitungsschutzschalter 18 und einem erfindungsgemäßen Modul 20, und zwar sind diese als Teil eines Stromkreises vorgesehen, um auf den Stromfluss innerhalb diese Stromkreis Einfluss zu nehmen. Die Anordnung wird über Leitungen 12, 12' mit einer Spannungsquelle, üblicherweise dem Versorgungsnetz, gekoppelt. Auf der anderen Seite sind die Verbraucher angekoppelt, vorliegend ist symbolisch der Verbraucher 14 dargestellt. Der bei der Anordnung 10 verwendete Leitungsschutzschalter 18 ist prinzipiell bekannt. Der Leitungsschutzschalter 18 ist Teil der erfindungsgemäßen Anordnung 10, weil das erfindungsgemäße Modul 20 ein Schalten des Leitungsschutzschalters 18 hervorruft.

In an sich bekannter Weise weist der Leitungsschutzschalter 18 pro Leitung einen thermischen Auslöser 24 bzw. 24' und einen magnetischen Auslöser 26 bzw. 26' auf. Die thermischen Auslöser 24, 24' sind üblicherweise als Bimetallelemente ausgeführt. Jeder thermische Auslöser 24, 24' soll ein Unterbrechen des Stromkreises, also der Verbindung zwischen den Leitungen 12, 12' einerseits und dem Verbraucher 14 andererseits, bewirken, wenn der fließende Strom dauerhaft eine zu hohe Stromstärke hat. Ein Bimetallelement verbiegt sich aufgrund der ohmschen Wärme bei einem Überstrom. Der thermische Auslöser 24 bzw. 24' wirkt dann auf einen Trennkontakt 28 bzw. 28' ein. Die Trennkontakte 28 bzw. 28' sind in einer Verbindungsleitung zwischen einem Eingangsanschluss 30 bzw. 30' einerseits und einem Ausgangsanschluss 32 bzw. 32' des Leitungsschalters 18 andererseits angeordnet.

Die magnetischen Auslöser 26 dienen ebenfalls zum Öffnen der Trennkontakte 28 bzw. 28', und zwar bei einem Kurzschlussstrom. Die magnetischen Auslöser 26, 26' sind in FIG 1 durch eine Spule symbolisiert, denn üblicherweise induziert der Kurzschlussstrom in jedem magnetischen Auslöser 26, 26' ein Magnetfeld, und dies bewirkt eine Verschiebung eines in FIG 1 nicht gezeigten mechanischen Elements, das eben auf die Kontakte 28 bzw. 28' einwirkt.

Das Modul 20 ist nun in Reihe zu dem Leitungsschutzschalter 18 geschaltet. Hierzu weist das Module 20 jeweils Eingangsanschlüsse 48 bzw. 48' und Ausgangsanschlüsse 50 bzw. 50' auf. Eine Verbindungsleitung zwischen dem Eingangsanschluss 48 und dem Ausgangsanschluss 50 einerseits sowie eine Verbindungsleitung zwischen dem Eingangsanschluss 48' und dem Ausgangsanschluss 50' andererseits ist dadurch in den Stromkreis schaltbar. Vorliegend ist der Ausgangsanschluss 32 des Leitungsschalters 18 mit dem Eingangsanschluss 48 des Moduls 20 verbunden und der Ausgangsanschluss 32' des Leitungsschalters 18 mit dem Eingangsanschluss 48' des Moduls 20 bzw. 22 verbunden. Hierzu können die in FIG 1 gezeigten Verbindungsleitungen 52 bzw. 52' eingesetzt werden, es kann aber auch eine direkte Ankopplung durch Verwendung von geeigneten Steckkontakten an dem Leitungsschutzschalter 18 einerseits und dem Modul 20 andererseits erfolgen. Der Verbraucher 14 ist an einer Seite mit dem Ausgangsanschluss 50 des Moduls 20 bzw. 22 und an der anderen Seite mit dem Ausgangsanschluss 50' des Moduls 20 bzw. 22 verbunden.

Das Modul 20 ist nichts anderes als ein an sich bekanntes Fehlerstromschutzmodul, das um eine Funktionalität erweitert ist. Im Folgenden wird zunächst die herkömmliche Fehlerstromfunktionalität beschrieben: In dem Modul 20 ist hierzu ein Summenstromwandler 34 vorgesehen. Durch den Summenstromwandler 34 sind beide Verbindungsleitungen, vom Anschluss 48 zum Anschluss 50 einerseits und vom Anschluss 48' zum Anschluss 50' andererseits geführt.

Im Regelfall, dass kein Fehlerstrom auftritt, also sämtlicher Strom, der über eine der Leitungen 12 und 12' zugeführt wird, auch über die jeweils andere Leitung der Leitungen 12 und 12' zurückgeführt wird, gleichen sich die Ströme in den beiden Verbindungsleitungen, die durch den Summenstromwandler 34 geführt sind, genau aus, und insbesondere heben sich die durch diese Ströme erzeugten Magnetfelder auf. Sobald ein Fehlerstrom auftritt, wird in dem Summenstromwandler 34 ein Restmagnetfeld induziert. Dieses induziert einen Strom in einer Sekundärwicklung 36 des Summenstromwandlers 34, wodurch ein Haltemagnet 38 bewegt wird, der auf einen Auslösemechanismus 40 einwirkt.

Kennzeichen des Auslösemechanismus 40 ist, dass er nur bei einer mechanischen Kopplung des Moduls 20 mit dem Leitungsschutzschalter 18 sinnvoll ist.

Von Fehlerstromschutzmodulen ist es bekannt, einen Auslösemechanismus wie den Auslösemechanismus 40 in dem Modul anzuordnen, der mit einem Auslösemechanismus eines Leitungsschutzschalters, der Trennkontakte aufweist, bei vorbestimmten Ausführungen eines solchen Schutzschalters koppelbar ist, damit eben der Auslösemechanismus des Moduls letztlich das Öffnen der Trennkontakte des angekoppelten Schutzschalters bewirkt. Dieses Prinzip ist vorliegend auch bei dem Modul 20 eingesetzt. Der Auslösemechanismus 40 des Moduls ist mit den Auslösemechanismen 72, 72' des Leitungsschutzschalters 18 koppelbar.

Bei dem Modul 20 ist auf eigene Trennkontakte verzichtet, und es werden die in einem IEC-System ohnehin vorhandenen Trennkontakte 28, 28' des Leitungsschutzschalters 18 zum Unterbrechen des Stromkreises eingesetzt.

Ist die Funktionalität eines Fehlerschutzstromschalters bereitgestellt, ist regelmäßig eine Prüfmöglichkeit vorgesehen. Hierzu ist eine Verbindungsleitung 42 bereitgestellt, und zwar verbindet diese den einen Eingangsanschluss 50' mit dem anderen Eingangsanschluss 50 derart, dass ein fließender Strom den Summenstromwandler 34 nur einfach durchläuft. Vorliegend ist durch die Verbindungsleitung 42 der in der FIG 1 rechte Durchlauf des Summenstromwandlers 34 umgangen, und der Strom fließt lediglich durch den linken Durchlauf, also in dem Abschnitt der Verbindungsleitung zwischen dem Eingangsanschluss 50 und dem Ausgangsanschluss 48. Damit der Strom über die Verbindungsleitung 42 begrenzt ist, ist ein Widerstandselement 44 vorgesehen. Der Strom soll nicht ständig über die Verbindungsleitung 42 fließen. Daher ist diese durch einen Schalter 46 unterbrochen. Bei herkömmlichen Fehlerstromschutzmodulen ist der Schalter 46 vermittels einer Prüftaste unmittelbar betätigbar. Dies ist vorliegend nicht der Fall, sondern der Schalter 46 wird über ein Relais (in FIG 1 nicht gezeigt) elektrisch gesteuert. Dies wird für eine Lichtbogenschutzfunktion eingesetzt.

Es sei nochmals Folgendes festgestellt: Der Leitungsschutzschalter 18 bewirkt ein Unterbrechen des Stromkreises bei einem Überstrom und bei einem Kurzschlussstrom. Das Modul 20 unterbricht darüber hinaus den Stromkreis bei einem Fehlerstrom durch Auslösen der Trennkontakte 28, 28' des Leitungsschutzschalters 18. Nun soll der Stromkreis auch dann unterbrochen werden, wenn in dem Stromkreis an irgendeiner Stelle ein Lichtbogen aufgetreten ist. Hierzu muss zunächst einmal überhaupt erkannt werden, dass ein solcher Lichtbogen aufgetreten ist. Der Lichtbogen kann nicht am Ort seines Auftretens, das bei einem beliebigen Verbraucher sein kann, erkannt werden, sondern muss anhand des Stromflusses in dem Stromkreis erkannt werden. Das Modul 20 weist hierzu zwei verschiedene Einheiten auf: Zum einen ist eine der Verbindungsleitungen zwischen Eingangsanschluss und Ausgangsanschluss des Moduls 20, vorliegend die Verbindungsleitung zwischen dem Eingangsanschluss 48' und dem Ausgangsanschluss 50', durch einen Stromwandler 54 geführt. Dem Stromwandler 54 ist ein Verstärkermodul 56 nachgeordnet, und das Verstärkermodul 56 ist mit einer Auswerte- und Steuereinheit 58 verbunden. Letzterer werden somit Daten über den in dem Stromkreis fließenden Laststrom zugeführt, wobei vorliegend von der Auswerteeinheit insbesondere die Amplitude des Laststroms erfasst wird. Als zweite Messeinheit, die zum Erfassen dient, ob ein Lichtbogen in dem Stromkreis auftritt, ist ein Hochfrequenzempfänger 60 in dem Modul 20 bereitgestellt, und zwar greift er Signale zwischen der Verbindungsleitung zwischen dem Eingangsanschluss 48 und dem Ausgangsanschluss 50 einerseits und der Verbindungsleitung zwischen dem Eingangsanschluss 48' und dem Ausgangsanschluss 50' andererseits ab. Die Messsignale werden ebenfalls der Auswerte- und Steuereinheit 58 zugeführt. Die Auswerte- und Steuereinheit 58 kann ein herkömmlicher Mikrocontroller sein. Um diesen mit Energie zu versorgen, ist ein Gleichrichter (AC/DC-Spannungswandler) 62 bereitgestellt, der die notwendige Gleichspannung zum Betrieb des Mikrocontrollers bereitstellt.

In der Auswerte- und Steuereinheit 58 wird ein Algorithmus eingesetzt, um anhand der von dem Verstärker 56 und dem Hochfrequenzempfänger 60 zugeführten Signale zu erkennen, ob in dem Stromkreis ein Lichtbogen aufgetreten ist bzw. zumindest aufgetreten sein könnte. Ein Lichtbogen ist zum einen durch einen Anstieg der Stromamplitude über ein vorbestimmtes Niveau oder auch bestimmte Stromsteigerungen erkennbar. Genaueres hierzu ist in dem US-Patent 6,031,699 beschrieben. Ein Lichtbogen ist zum anderen auch anhand des Hochfrequenzrauschens erkennbar, insbesondere an einem periodischen Verhalten desselben mit dem Strom. Details hierzu sind in dem US-Patent 5,729,45 beschrieben. Der von der Auswerte- und Steuereinheit 58 verwendete Algorithmus kann beide Kriterien alternativ, bevorzugt aber in Kombination verwenden, wobei über die genannten einfachen Zusammenhänge hinaus auch kompliziertere Zusammenhänge durch einen geeigneten Algorithmus erkennbar sein können. Beim Modul 20 wird also durch die Mittel 54, 56, 60 und den Auswertealgorithmus in der Auswerte- und Steuereinheit 58 erfasst, ob ein Lichtbogen in dem Stromkreis auftritt.

Diese Erfassung ist selbstverständlich nur dann sinnvoll, wenn eine Unterbrechung des Stromkreises nach dem Erkennen des Auftretens eines Lichtbogens erfolgt.

Das Unterbrechen des Stromkreises erfolgt nun ganz einfach unter Verwendung der Verbindungsleitung 42: Sobald die Auswerte- und Steuereinheit 58 das Auftreten eines Lichtbogens erfasst hat, steuert sie das zum Schalter 46 gehörende Relais derart an, dass der Schalter 46 geschlossen wird. Dann fließt ein solcher Strom, dass in dem Stromwandler 34 dieselbe Wirkung erzielt wird, als würde ein realer Fehlerstrom fließen, so dass der mechanische Auslösemechanismus 40 betätigt wird, dieser auf die Auslösemechanismen 72 und 72' einwirkt und die Trennkontakte 28 und 28' wunschgemäß geöffnet werden.

Kennzeichen des Moduls ist somit, dass die mechanische Kopplung nicht nur im Falle eines realen Fehlerstroms zum Öffnen der Trennkontakte 28 und 28' eingesetzt wird, sondern auch im Falle des Auftretens eines Lichtbogens. Ein herkömmliches Fehlerstromschutzmodul kann einfach durch die Mittel zum Erfassen 54, 56, 58, 60 ergänzt werden.

An die Stelle der direkt mit dem Schalter 46 gekoppelten Prüftaste tritt bevorzugt eine Prüftaste 80, die einen Stromkreis schließt, wobei der Stromfluss durch die Auswerte- und Steuereinheit 58 erkannt wird, diese ihren Algorithmus durchlaufen lässt und das zu dem Schalter 46 gehörende Relais testweise ansteuert.

Eine Anzeige 82 zeigt den Zustand des Moduls und die erfasste Ursache der letzten Auslösung an, dadurch kann ein Techniker schnell feststellen, ob tatsächlich ein gefährlicher Lichtbogen die Ursache der Auslösung war, oder ob lediglich ein Isolationsfehler vorliegt, denn die Mittel zum Erfassen, ob ein Lichtbogen auftritt, können lediglich vorbestimmte Kriterien verwenden und nicht mit letzter Sicherheit gewährleisten, dass real ein Lichtbogen erkannt wird. Im Zweifel lösen sie aus.

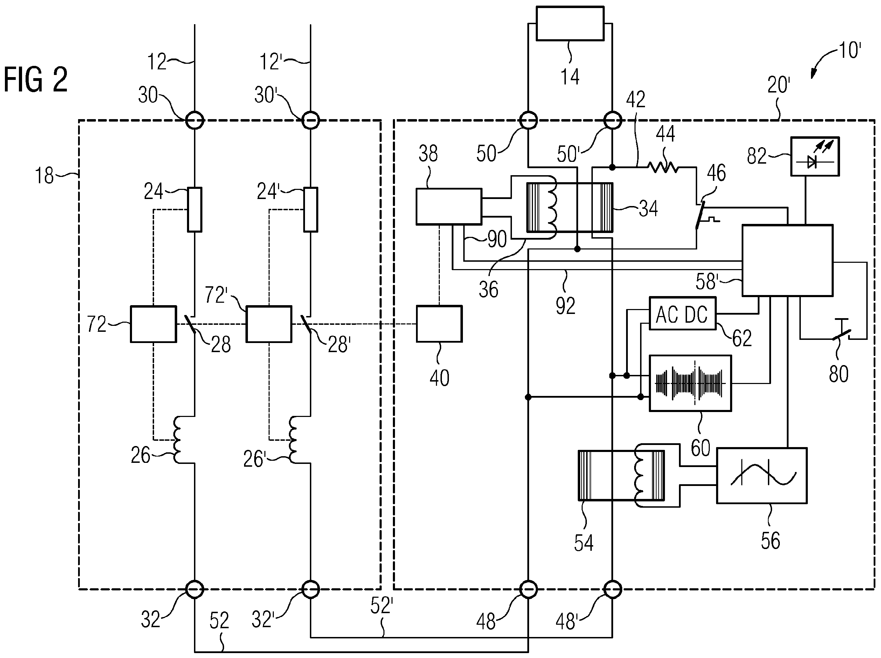

Die in FIG 2 gezeigte Anordnung 10' ist eine Ausführungsform der Erfindung, die mit der in FIG 1 gezeigten Ausführungsform in großen Teilen übereinstimmt. Es werden daher nur diejenigen Elemente erläutert, durch die sich die in FIG 2 gezeigte Ausführungsform von der bereits beschriebenen Unterscheidet. Bauteile, die funktionsgleich zu solchen in FIG 1 gezeigten sind, haben in FIG 2 dieselben Bezugszeichen wie in FIG 1.

Bei dem in FIG 2 gezeigten Modul 20' ist die Auswerte- und Steuereinheit 58' über eine Hinleitung 90 und eine Rückleitung 92 in der Lage, einen Haltemagneten 38 direkt zu bewegen. Die Auswerte- und Steuereinheit 58' prägt dazu einen Strom über die Hinleitung 90 und die Rückleitung 92 in eine Sekundärwicklung 36 eines Summenstromwandlers 34 ein. Die Hinleitung 90 und die Rückleitung 92 bilden damit im Sinne der Erfindung Mittel zum Bewegen des Haltemagneten 38.

Obwohl die Auswerte- und Steuereinheit 58' über die Hinleitung 90 und die Rückleitung 92 direkt auf den Haltemagneten 38 einwirken kann, sind in dem Modul 20' dennoch eine Verbindungsleitung 42 und ein Schalter 46 bereitgestellt, mit denen ein Fehlerstrom simuliert werden kann. Damit bleibt es weiterhin möglich, den Summenstromwandler 34 in der oben beschriebenen Weise mittels der Auswerte- und Steuereinheit 58' zu testen, wenn die Prüftaste 80 gedrückt wird.

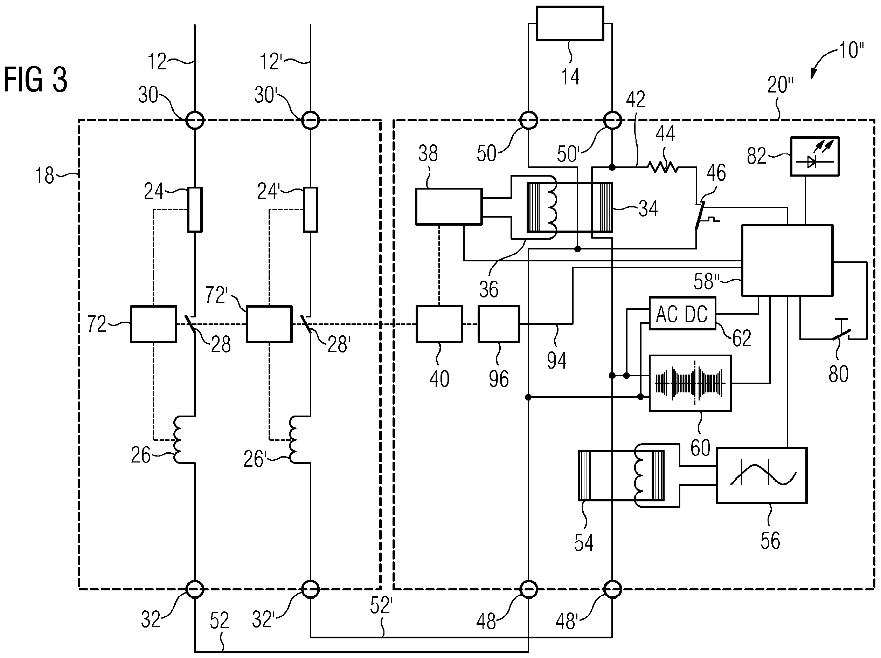

In FIG 3 besteht eine Anordnung 10" aus einem in Reihe geschalteten Leitungsschutzschalter 18 und einer Ausführungsform eines erfindungsgemäßen Moduls 20". Auch diese Anordnung 10" weist mit der in FIG 1 gezeigten Anordnung viele Übereinstimmungen auf, so dass einander entsprechende Elemente der beiden Anordnungen nicht noch einmal erläutert werden. In FIG 3 sind für diejenigen Elemente, die dieselbe Funktion wie bei der Anordnung in FIG 1 aufweisen, dieselben Bezugszeichen vergeben.

Bei dem in FIG 3 gezeigten Modul 20" löst die Auswerte- und Steuereinheit 58" bei Auftreten eines Lichtbogens einen Auslösemechanismus 40 durch einen eigens dafür bereitgestellten Haltemagneten 96 aus. Die Auswerte- und Steuereinheit 58" steuert den Haltemagneten 96 über eine Signalleitung 94 elektrisch an. Der Haltemagnet 96 wird dadurch aus einer Ruhelage bewegt. Er betätigt dann den mechanischen Auslösemechanismus 40, wodurch der Schutzschalter 18 in der bereits zu FIG 1 beschriebenen Weise ausgelöst wird.

In einer nicht dargestellten Ausführungsform eines erfindungsgemäßen Moduls wird anstelle eines Haltemagneten ein elektrisch betriebener Aktor verwendet. Ein solcher Aktor kann den mechanischen Auslösemechanismus 40 beispielsweise mittels eines Piezo-Elements betätigen. Die elektrische Energie zum Betreiben des Aktors wird dabei von einem Gleichrichter bereitgestellt, wie er bei dem in FIG 3 gezeigten Modul 20" als Gleichrichter 62 dargestellt ist.

Zusammenfassend ist durch die Ausführungsbeispiele gezeigt, wie es durch die Erfindung ermöglicht wird, einen Schutz von Stromkreisen in IEC-Technik vor Lichtbögen zu ermöglichen. Dieser Schutz ist dabei ohne einen übermäßigen Aufwand bereitstellbar. Die erfindungsgemäßen Module haben zudem den Vorteil, dass eine Fehlerstromschutzfunktion weiterhin netzspannungsunabhängig bereitgestellt wird.

### Bezugszeichenliste

- 10, 10', 10": Anordnung
- 12, 12': Leitungen
- 14: Verbraucher
- 18: Schutzschalter
- 20, 20', 20": Modul
- 24, 24',26, 26': Auslöser
- 28, 28': Trennkontakte
- 30, 30': Eingangsanschlüsse
- 32, 32': Ausgangsanschlüsse
- 34, 54: Stromwandler
- 36: Sekundärwicklung
- 38: Haltemagnet
- 40, 72, 72': Auslösemechanismen
- 42: Verbindungsleitung
- 44: Widerstandselement
- 46: Schalter
- 48, 48': Eingangsanschlüsse
- 50, 50': Ausgangsanschlüsse
- 52, 52': Verbindungsleitungen
- 54: Stromwandler
- 56: Verstärkermodul
- 58, 58', 58": Auswerte- und Steuereinheit
- 60: Hochfrequenzempfänger
- 62: Gleichrichter
- 72, 72': Auslösemechanismen
- 80: Prüftaste
- 82: Anzeige
- 90: Hinleitung
- 92: Rückleitung
- 94: Signalleitung
- 96: Haltemagnet

## Patentansprüche

1. Mit einem Schutzschalter (18) mechanisch koppelbares Modul (20, 20', 20")
- mit zumindest zwei Eingangsanschlüssen (48, 48') und zumindest zwei Ausgangsanschlüssen (50, 50'), wobei je ein Eingangsanschluss (48, 48') über eine Verbindungsleitung mit je einem Ausgangsanschluss (50, 50') verbunden ist, und
- mit für eine Fehlerstromschutzfunktion bereitgestellten Mitteln (34, 36, 38), die einen Summenstromwandler (34) umfassen und die bei einer einen Grenzwert überschreitenden Differenz zwischen der Stromstärke eines durch zumindest eine erste der Verbindungsleitungen in eine Hinrichtung fließenden Stroms einerseits und der Stromstärke eines durch zumindest eine zweite der Verbindungsleitungen in einer Rückrichtung fließenden Stroms andererseits zumindest mittelbar auf eine mechanische Auslöseeinrichtung (40) einwirken, wobei
- die mechanische Auslöseeinrichtung (40) wiederum durch einen im Bereich der Sekundärwicklung (36) des Summenstromwandlers bereitgestellten Magneten (38) betätigt wird und die mechanische Auslöseeinrichtung (40) für den Fall der Kopplung eines Schutzschalters (18) mit dem Modul (20, 20', 20") auf diesen Schutzschalter (18) einzuwirken ausgelegt ist, **gekennzeichnet durch**
- Mittel (54, 56, 60, 58, 58', 58'') zum Erfassen, ob ein Lichtbogen in einem Stromkreis, in den das Modul (20, 20', 20") geschaltet ist, auftritt, wobei
- eine Steuereinrichtung (58, 58', 58") mit den Mitteln zum Erfassen (54, 56, 60) gekoppelt oder Teil derselben ist und wobei
- die Steuereinrichtung (58, 58', 58") die mechanische Auslöseeinrichtung (40) zumindest mittelbar betätigt.

2. Modul (20') nach Anspruch 1, bei dem
- Mittel (90, 92) zum Bewegen des Magneten (38) bereitgestellt sind und
- die Steuereinrichtung (58') die Mittel (90, 92) zum Bewegen elektrisch ansteuert, wenn die Mittel (54, 56, 58', 60) zum Erfassen das Vorliegen eines Lichtbogens erkennen.

3. Modul (20") nach Anspruch 1, bei dem
- Mittel (94, 96) zum Betätigen der Auslöseeinrichtung (40) bereitgestellt sind und
- die Steuereinrichtung (58") die Mittel (94, 96) zum Betätigen elektrisch ansteuert, wenn die Mittel (54, 56, 58", 60) zum Erfassen das Vorliegen eines Lichtbogens erkennen.

4. Modul (20, 20', 20") nach einem der vorhergehenden Ansprüche, bei dem
- Mittel (42, 44, 46) zum wahlweisen Erzeugen eines in einem Erfassungsbereich des Summenstromwandlers (34) nur über die zumindest erste oder nur über die zumindest zweite der Verbindungsleitungen fließenden Stroms vorgesehen sind, wobei
- die Mittel (46) zum wahlweisen Erzeugen durch die Steuereinrichtung (58, 58', 58") elektrisch ansteuerbar sind.

5. Modul (20, 20', 20") nach Anspruch 4, bei dem die Mittel zum wahlweisen Erzeugen eine über einen Schalter (46) trennbare Verbindung (42) zwischen einem Anschluss an einer Verbindungsleitung auf einer Eingangsseite des Summenstromwandlers (34) und einem Anschluss an einer anderen Verbindungsleitung auf einer Ausgangsseite (34) des Summenstromwandlers umfassen.

6. Modul (20, 20', 20") nach einem der vorhergehenden Ansprüche, bei dem im Betrieb die Mittel zum Erfassen zum Gewinnen einer Information über den in dem Stromkreis fließenden Strom an zumindest einer der Verbindungsleitungen ausgelegt sind.

7. Modul (20, 20', 20") nach einem der vorhergehenden Ansprüche, bei dem die Mittel zum Erfassen Mittel (54, 56, 58, 58', 58'') zum Messen der Amplitude des über eine Verbindungsleitung fließenden Stroms umfassen.

8. Modul (20, 20', 20") nach einem der vorhergehenden Ansprüche, bei dem die Mittel zum Erfassen einen Hochfrequenzempfänger (60) umfassen.

9. Modul (20, 20', 20") nach Anspruch 7 oder 8, bei dem die Mittel zum Erfassen eine Auswerteeinheit (58, 58', 58") umfassen, die den Mitteln zum Messen (54, 56) oder dem Hochfrequenzempfänger (60) nachgeordnet oder Teil zumindest eines dieser ist, und die bei Erfüllung bestimmter Kriterien einen Schalter (46) oder die Mittel (90, 92) zum Bewegen oder die Mittel (94, 96) zum Betätigen ansteuert.

10. Anordnung (10, 10', 10") aus einem in Reihe geschalteten Leitungsschutzschalter (18) einerseits und einem Modul (20, 20', 20") nach einem der vorhergehenden Ansprüche andererseits, wobei der Leitungsschutzschalter (18) mit dem Modul (20, 20', 20'') mechanisch derart koppelbar gestaltet ist und tatsächlich gekoppelt ist, dass die mechanische Auslöseeinrichtung (40) des Moduls auf zumindest eine mechanische Auslöseeinrichtung (72, 72') des Leitungsschutzschalters (18) einzuwirken ausgelegt ist, wobei jede Auslöseeinrichtung (72, 72') des Leitungsschutzschalters (18) zum Öffnen zumindest eines Trennkontakts (28, 28') zum Unterbrechen eines Stromkreises, in den die Anordnung (10, 10', 10") schaltbar oder in dem sie geschaltet ist, ausgelegt ist.

## Claims

1. Module (20, 20', 20") mechanically linkable to a circuit breaker (18)
- with at least two input terminals (48, 48') and at least two output terminals (50, 50'), wherein an input terminal (48, 48') is connected in each case via a connecting line to an output terminal (50, 50'), and
- with means (34, 36, 38) provided for a fault current protection function, comprising a sum current transformer (34) and which, for a difference which exceeds a threshold value between the current strength of at least one current flowing through a first of the connecting lines in an outwards direction on the one hand and a second current flowing through a second of the connecting lines in the return direction on the other hand, acts at least indirectly on a mechanical triggering device (40), wherein
- the mechanical triggering device (40) in its turn is actuated by a magnet (38) provided in the area of the secondary winding (36) of the sum current transformer (38) and the mechanical triggering device (40), for the case in which a circuit breaker (18) is coupled to the module (20, 20', 20"), is designed to act on this circuit breaker (18), **characterised by**
- means (54, 56, 60, 58, 58', 58") for detecting whether arcing is occurring in a circuit into which the module (20, 20', 20") is connected, wherein
- a control device (58, 58', 58") is coupled to the means for detection (54, 56, 60) or is part of the same and wherein
- the control device (58, 58', 58") actuates the mechanical triggering device (40) at least indirectly.

2. Module (20') according to claim 1, in which
- means (90, 92) are provided for moving the magnet (38) and
- the control device (58') activates the means (90, 92) for moving the magnet electrically, when the means (54, 56, 58', 60) for detection recognise the presence of arcing.

3. Module (20") according to claim 1, in which
- means (94, 96) are provided for actuation the triggering device (40) and
- the control device (58") activates the means (94, 96) for actuation electrically when the means (54, 56, 58", 60) for detection recognise the presence of arcing.

4. Module (20, 20', 20") according to one of the preceding claims, in which
- means (42, 44, 46) are provided for optional creation of a current flowing in a detection area of the sum current transformer (34) only via the at least first or only via the at least second of the connecting lines, wherein
- the means (46) for optional creation are able to be electrically activated by the control device (58, 58', 58").

5. Module (20, 20', 20") according to claim 4, in which the means for optional creation comprise a connection (42) able to be disconnected via a switch (46) between a terminal on a connecting line on an input side of the sum current transformer (34) and a terminal on another connecting line on an output side (34) of the sum current transformer.

6. Module (20, 20', 20") according to one of the preceding claims, in which during operation the means for detection are designed for obtaining information about the current flowing in the circuit on at least one of the connecting lines.

7. Module (20, 20', 20") according to one of the preceding claims, in which the means for detection include means (54, 56, 58, 58', 58") for measuring the amplitude of the current flowing over a connecting line.

8. Module (20, 20', 20") according to one of the preceding claims, in which the means for detection comprise a high-frequency receiver (60).

9. Module (20, 20', 20") according to claim 7 or 8, in which the means for detection comprise an evaluation unit (58, 58', 58") arranged downstream from the means for measurement (54, 56) or the high-frequency receiver (60) or are part of at least one of these units, and which, when specific criteria are fulfilled, activate a switch (46) or the means (90, 92) for movement or the means (94, 96) for actuation.

10. Arrangement (10, 10', 10") comprising a series-connected line circuit breaker (18) on the one hand and a module (20, 20', 20") according to one of the preceding claims on the other hand, wherein the line circuit breaker (18) is designed to be able to be coupled mechanically to the module (20, 20', 20") and actually is coupled to it such that the mechanical triggering device (40) is designed to act on at least one mechanical triggering device (72, 72') of the line circuit breaker (18), wherein each triggering device (72, 72') of the line circuit breaker (18) is designed for opening at least one break contact (28, 28') for interrupting a circuit in which the arrangement (10, 10', 10") is able to be connected or in which it is connected.

## Revendications

1. Module (20, 20', 20") pouvant être couplé mécaniquement à un disjoncteur de protection (18)
- comprenant au moins deux raccordements d'entrée (48, 48') et au moins deux raccordements de sortie (50, 50'), un raccordement d'entrée (48, 48') étant relié à un raccordement de sortie (50, 50') par l'intermédiaire d'une ligne de liaison, et
- comprenant des moyens (34, 36, 38) fournis pour une fonction de protection contre le courant de défaut, lesquels comprennent un convertisseur de courant totalisateur (34) et lesquels, lors d'une différence, dépassant une valeur limite, entre l'intensité du courant d'un courant circulant à travers au moins une première des lignes de liaison dans une direction d'aller, d'une part, et l'intensité de courant d'un courant circulant à travers au moins une deuxième des lignes de liaison dans une direction de retour, d'autre part, agissent au moins indirectement sur un dispositif de déclenchement (40) mécanique,
- le dispositif de déclenchement (40) mécanique, à son tour, étant activé par un aimant (38) fourni dans la partie de l'enroulement secondaire (36) du convertisseur de courant totalisateur, et le dispositif de déclenchement (40) mécanique, en cas du couplage d'un disjoncteur de protection (18) au module (20, 20', 20"), étant conçu pour agir sur ce disjoncteur de protection (18),
**caractérisé par**
- des moyens (54, 56, 60, 58, 58', 58") destinés à détecter si un arc de lumière se produit dans un circuit de courant dans lequel le module (20, 20', 20") est connecté,
- un dispositif de commande (58, 58', 58") étant couplé aux moyens de détection (54, 56, 60) ou faisant partie de ceux-ci, et
- le dispositif de commande (58, 58', 58") actionnant au moins indirectement le dispositif de déclenchement (40) mécanique.

2. Module (20') selon la revendication 1, dans lequel
- des moyens (90, 92) destinés à déplacer l'aimant (38) sont fournis, et
- dans lequel le dispositif de commande (58') active les moyens (90, 92) de déplacement électriquement lorsque les moyens (54, 56, 58', 60) de détection identifient la présence d'un arc de lumière.

3. Module (20") selon la revendication 1, dans lequel
- des moyens (94, 96) destinés à actionner le dispositif de déclenchement (40) sont fournis, et
- dans lequel le dispositif de commande (58") active les moyens (94, 96) d'actionnement électriquement lorsque les moyens (54, 56, 58", 60) de détection identifient la présence d'un arc de lumière.

4. Module (20, 20', 20") selon l'une quelconque des revendications précédentes, dans lequel
- des moyens (42, 44, 46) destinés à générer sélectivement un courant circulant dans une zone de détection du convertisseur de courant totalisateur (34) seulement par l'intermédiaire de l'au moins une première ou seulement par l'intermédiaire de l'au moins une deuxième des lignes de liaison étant ménagés,
- les moyens (46) pour la génération sélective étant activables électriquement par le dispositif de commande (58, 58', 58").

5. Module (20, 20', 20") selon la revendication 4, dans lequel les moyens destinés à la génération sélective comprennent une liaison (42), pouvant être coupée par l'intermédiaire d'un interrupteur (46), entre un raccordement sur une ligne de liaison sur un côté d'entrée du convertisseur de courant totalisateur (34) et un raccordement sur une autre ligne de liaison sur un côté de sortie (34) du convertisseur de courant totalisateur.

6. Module (20, 20', 20") selon l'une quelconque des revendications précédentes, dans lequel, en fonctionnement, les moyens de détection sont conçus pour acquérir une information sur le courant circulant dans le circuit de courant sur au moins une des lignes de liaison.

7. Module (20, 20', 20") selon l'une quelconque des revendications précédentes, dans lequel les moyens de détection comprennent des moyens (54, 56, 58, 58', 58") de mesure de l'amplitude du courant circulant par l'intermédiaire d'une ligne de liaison.

8. Module (20, 20', 20") selon l'une quelconque des revendications précédentes, dans lequel les moyens de détection comprennent un récepteur à haute fréquence (60).

9. Module (20, 20', 20") selon la revendication 7 ou 8, dans lequel les moyens de détection comprennent une unité d'évaluation (58, 58', 58") qui est installée en aval des moyens de mesure (54, 56) ou du récepteur à haute fréquence (60) ou qui fait partie au moins de l'un de ceux-ci, et qui, lorsque des critères déterminés sont remplis, active un interrupteur (46) ou les moyens (90, 92) de déplacement ou les moyens (94, 96) d'actionnement.

10. Agencement (10, 10', 10") constitué d'un disjoncteur (18) connecté en série, d'une part, et d'un module (20, 20', 20") selon l'une quelconque des revendications précédentes, d'autre part, le disjoncteur (18) étant conçu pour pouvoir être couplé mécaniquement au module (20, 20', 20") et y étant effectivement couplé de manière à ce que le dispositif de déclenchement (40) mécanique du module soit conçu pour agir sur au moins un dispositif de déclenchement (72, 72') mécanique du disjoncteur (18), chaque dispositif de déclenchement (72, 72') du disjoncteur (18) étant conçu pour ouvrir au moins un contact de coupure (28, 28') destiné à interrompre un circuit de courant dans lequel l'agencement (10, 10', 10") est commutable ou dans lequel il est commuté.
